# FASCICULE DE BREVET EUROPEEN

(11) **EP 3 852 945 B1**
(45) Date de publication et mention de la délivrance du brevet: **02.07.2025**
(21) Numéro de dépôt: 19780168.1
(22) Date de dépôt: 19.09.2019
(51) Int. Cl.: B21D 26/14, B23K 20/06

(54) **ENSEMBLE POUR DÉFORMER DES PIÈCES MÉTALLIQUES PAR IMPULSION MAGNÉTIQUE**
ANORDNUNG ZUM VERFORMEN VON METALLTEILEN MITTELS MAGNETISCHER IMPULSE
ASSEMBLY FOR DEFORMING METAL PARTS BY MAGNETIC PULSE

(30) Priorité: 20.09.2018 FR 1858507
(43) Date de publication de la demande: 28.07.2021
(73) Titulaire: ADM28 France, 31100 Toulouse (FR)
(72) Inventeur: RIVAULT, Thomas, 31100 TOULOUSE (FR); THOUET, Pierre, 31140 MONTBERON (FR)
(74) Mandataire: Ipside
(86) Numéro de dépôt international: PCT/EP2019/075149
(87) Numéro de publication internationale: WO 2020/058391

(56) Documents cités:
- WO-A1-2015/101469
- WO-A2-97/22426
- US-A- 5 953 805
- US-A1- 2016 221 059

## Description

### Domaine de l'invention

La présente invention s'inscrit dans le domaine de la technologie pour le travail des pièces métalliques par impulsion magnétique. Plus particulièrement, elle s'inscrit dans le domaine de la déformation de pièces métalliques par impulsion magnétique, tel que le magnéto-formage, le magnéto-soudage ou le magnéto-sertissage. La présente invention concerne un ensemble comprenant une bobine destinée à la déformation de pièces métalliques par impulsion magnétique associée à une pièce monobloc d'isolation électrique de ladite bobine.

### État de l'art

La déformation des pièces métalliques par impulsion magnétique est réalisée sous l'action de forces électromagnétiques générées par une bobine. Cette déformation permet, soit de réaliser des opérations de formage, pour façonner une pièce métallique selon la forme d'une matrice, soit de réaliser des opérations de soudage et/ou de sertissage, pour assembler de manière permanente deux pièces entre elles.

La bobine est généralement constituée d'une première branche, par laquelle entre le courant libéré par les condensateurs, et d'une deuxième branche en liaison avec la première branche, par laquelle passe le courant. Les deux branches sont agencées l'une par rapport à l'autre de sorte à s'étendre sensiblement dans une même direction afin de ménager une fente d'épaisseur régulière de quelques dixièmes de millimètres.

De façon connue de l'état de la technique, un dispositif pour déformer les pièces métalliques par impulsion magnétique comporte un ou plusieurs condensateurs relié(s) à une bobine pour créer un champ magnétique bref et intense.

Le ou les condensateurs servent au stockage d'une certaine quantité d'énergie électrique. Le champ magnétique intense créé est le résultat d'une décharge très rapide de cette énergie électrique dans la bobine sous la forme d'un courant variable de très forte intensité, en un temps très court. A titre d'exemple, certains dispositifs peuvent atteindre quelques centaines de milliers d'ampères en quelques microsecondes.

Le courant génère un champ magnétique variable entre la bobine et la pièce, préalablement placée à proximité, et induit des courants de Foucault dans cette pièce. Ces courants de Foucault, associés au champ magnétique environnant développent dans la pièce des forces qui engendrent une vive accélération de ladite pièce en direction, d'une autre pièce.

Selon notamment le niveau d'intensité du courant généré, l'angle de collision et la vitesse de collision, la pièce est soit formée, soit soudée à une autre pièce.

Pour éviter tout passage d'électricité entre une bobine utilisée et la pièce à déformer, ladite bobine nécessite une isolation électrique à son interface avec ladite pièce.

En effet, la circulation de courant de très forte intensité dans la pièce pourrait conduire à une destruction de cette dernière ou à sa dégradation. En outre, cette circulation pourrait engendrer des problèmes de sécurité.

Il est généralement connu de coller une couche de matériau isolant électriquement sur au moins une portion de la surface de la bobine, et notamment sur une zone destinée à être en vis-à-vis de la pièce à déformer, dite « partie active », comme décrit dans les documents DE102004016414, DE10207655 et JP2011161512.

La partie active correspond à une zone d'induction entre la bobine et la ou les pièces à déformer.

Dans la pratique, la couche de matériau isolant électriquement est réalisée à partir de la superposition de feuilles réalisées en matériau polymère polyimide. Les feuilles présentent une faible résistance mécanique. Une couche de ruban adhésif est donc généralement appliquée sur lesdites feuilles pour former une pellicule protectrice contre d'éventuels impacts ou frottements occasionnés lors de la mise en place de la ou des pièces à déformer au sein de la bobine.

Ces feuilles présentant, de plus, l'inconvénient d'une certaine rigidité, leur application est délicate sur les bobines dont la partie active présente une forme géométrique complexe, par exemple présentant une forme géométrique comprenant un nombre important d'angles et/ou des portions convexes et/ou concaves de faible rayon. En effet, les feuilles sont appliquées soigneusement pour éviter la création de plis. Les zones de plis sont plus sensibles aux sollicitations mécaniques dans le sens où elles constituent des zones plus sujettes à la rupture, au déchirement. En outre, lorsqu'un pli est situé en regard de la partie active de la bobine, il engendre une perte d'efficacité dans cette zone de la partie active car il créé une surépaisseur locale.

Il est également nécessaire d'isoler électriquement les deux banches de la bobine l'une de l'autre, et donc d'appliquer des feuilles en matériau polymère polyimide dans la fente, sur les parties en vis-à-vis des première et deuxième branches, notamment pour éviter toute génération de court-circuit, et donc d'arc électrique. On comprend donc que la réalisation de cette opération est d'autant plus complexe que l'épaisseur de la fente est réduite.

Au vu de ce qui précède, la solution technique de l'état de l'art pour isoler électriquement la bobine est fastidieuse à mettre en œuvre et requiert un savoir-faire important. A titre d'exemple, cette solution technique peut nécessiter jusqu'à une journée de travail selon la complexité de la forme géométrique de la bobine.

Cette solution présente donc un coût important, notamment du fait de la durée de préparation nécessaire par une personne qualifiée comme décrit ci-avant. En outre, l'endommagement de la couche en matériau isolant électriquement peut impliquer le remplacement complet de la bobine à laquelle elle est attachée, ou au moins son démontage pour retirer la couche endommagée.

Aussi, l'application de ladite couche est difficilement reproductible, ce qui peut engendrer des différences de résultats entre deux opérations identiques respectivement réalisées avec des bobines distinctes. Il peut en résulter d'importants problèmes de qualité.

Il est connu, notamment du document WO 97/22426, de recourir à une pièce, réalisée dans un matériau isolant pour recouvrir la surface active et qui s'étend dans la fente pour éviter les arcs électriques.

### Exposé de l'invention

La présente invention a pour objectif de palier les inconvénients précités en proposant un ensemble pour déformer des pièces métalliques par impulsion magnétique, par exemple par magnéto-formage et/ou magnéto-soudage, tel que défini par la revendication 1..

Grâce à ces caractéristiques, l'ensemble peut être mis en œuvre rapidement et simplement. En effet, il suffit à un opérateur d'appliquer le masque dans sa position d'utilisation sur la bobine pour former un ensemble. Cette mise en œuvre ne requiert aucune qualification particulière.

La quatrième partie du masque a pour effet de conférer au masque une rigidité et une résistance mécanique plus importantes. La quatrième partie permet, en outre, de faciliter la manipulation du masque. La quatrième partie augmente la surface d'appui du masque contre la bobine, ce qui permet d'assurer une meilleure stabilité du masque en position d'utilisation.

Le masque coopérant de manière amovible avec la bobine et étant réalisé en un seul tenant, il peut être facilement et rapidement retiré de ladite bobine, par exemple pour subir un contrôle qualité. Un tel contrôle peut consister en des tests diélectriques.

En outre, grâce à ces caractéristiques, les frais liés à la maintenance sont considérablement réduits puisque la durée de vie du masque est indépendante de celle de la bobine. En effet, le remplacement du masque n'implique pas le remplacement de la bobine. A cet effet, il est possible de prévoir, pour un ensemble donné, plusieurs masques de rechange dans le cas où le masque utilisé avec la bobine serait détérioré.

Dans des modes particuliers de réalisation, l'invention répond en outre aux caractéristiques suivantes, mises en œuvre séparément ou en chacune de leurs combinaisons techniquement opérantes.

Dans des modes particuliers de réalisation de l'invention, la bobine comprend une ouverture traversante dans laquelle débouche la fente. Le masque comprend une troisième partie recouvrant une surface périphérique interne de l'ouverture lorsqu'il est en position d'utilisation.

Ces caractéristiques ont pour effet d'assurer la mise en position et/ou le maintien en position du masque dans sa position d'utilisation.

Dans des modes de réalisation de l'invention, le masque est réalisé dans un matériau flexible.

Cette caractéristique permet de faciliter la mise en position d'utilisation du masque sur la bobine et son retrait de ladite bobine.

Dans des modes de réalisation de l'invention, le masque est réalisé dans un matériau élastique.

Cette caractéristique participe à faciliter la mise en position d'utilisation du masque sur la bobine et son retrait de ladite bobine.

Dans des modes de réalisation de l'invention, le masque est réalisé dans un matériau silicone.

Le masque peut donc être fabriqué par surmoulage ou par moulage par compression ou par injection, ce qui participe à la réduction des coûts de production et permet de pouvoir réaliser une multitude de masques de forme identique et présentant des caractéristiques similaires.

Dans des modes de réalisation de l'invention, le matériau dans lequel est réalisé le masque est choisi pour résister à une température au moins égale à 200°C et pour présenter une rigidité diélectrique au moins égale à 20kV/mm, de sorte à résister aux contraintes auxquelles le masque est soumis lors de l'utilisation de l'ensemble.

### Présentation des figures

L'invention sera mieux comprise à la lecture de la description suivante, donnée à titre d'exemple nullement limitatif, et faite en se référant aux figures qui représentent :
- Figure 1 : une vue en perspective d'un ensemble pour déformer des pièces métalliques par impulsion magnétique selon un premier exemple de réalisation de l'invention, ledit ensemble comprenant une bobine et un masque,
- Figure 2 : une vue en perspective uniquement de la bobine de la figure 1,
- Figure 3 : une vue en perspective uniquement du masque de la figure 1,
- Figure 4 : une vue en perspective d'un ensemble pour déformer des pièces métalliques par impulsion magnétique selon un deuxième exemple de réalisation de l'invention, ledit ensemble comprenant une bobine et un masque,
- Figure 5 : une vue en perspective d'une bobine de la figure 4,
- Figure 6 : une vue de dessous en perspective uniquement du masque de la figure 4,
- Figure 7 : une vue en perspective d'un ensemble pour déformer des pièces métalliques par impulsion magnétique selon un troisième exemple de réalisation de l'invention, ledit ensemble comprenant une bobine et un masque,
- Figure 8 : une vue en perspective uniquement de la bobine de la figure 7,
- Figure 9 : une vue en perspective uniquement du masque de la figure 7.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description détaillée de l'invention

La présente invention concerne un ensemble 10 pour déformer des pièces métalliques par impulsion magnétique, tel que par magnéto-formage, par magnéto-soudage ou par magnéto-sertissage. L'ensemble 10 fait partie d'un système comprenant une source d'alimentation en courant. Typiquement, une telle source d'alimentation en courant peut être formée par un générateur comprenant un ou plusieurs condensateurs et un commutateur permettant de libérer dans un intervalle de temps très bref le courant stocké dans le ou les condensateurs.

L'ensemble 10 comporte une bobine 20 d'induction et un masque 30 réalisé en matériau isolant électriquement.

Le masque 30 est configuré pour coopérer avec ladite bobine 20.

On entend dans le présent texte, par le terme « coopérer », que le masque 30 et la bobine 20, lorsqu'ils sont en contact l'un contre l'autre, sont mutuellement imbriqués.

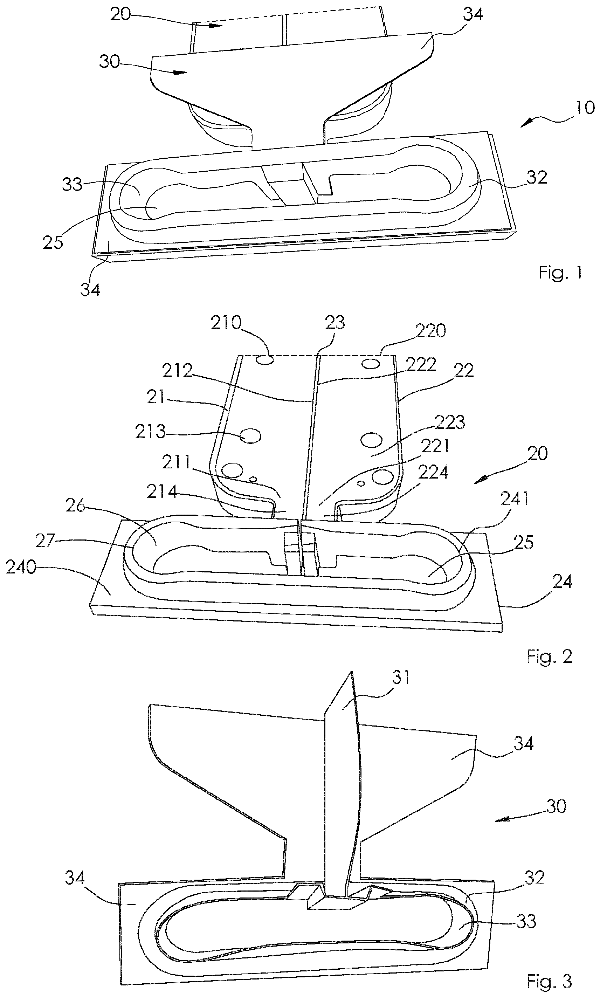

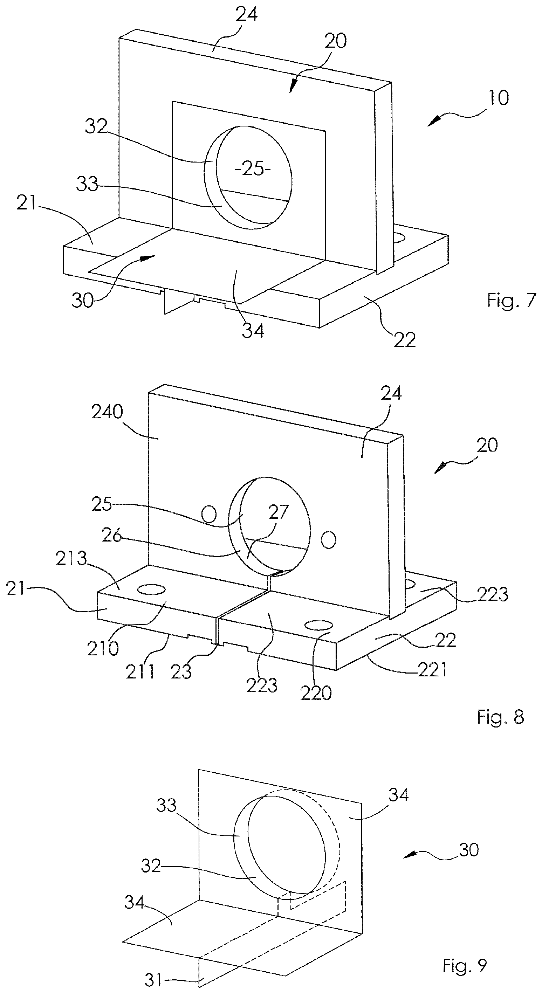

Dans la suite du texte, trois exemples de réalisation d'un ensemble 10 sont décrits. Les figures 1 à 3 et 4 à 6 représentent respectivement des premier et deuxième exemples de réalisation de l'invention dans lesquels les bobines 20 sont du type dit « bobine plate », et sont particulièrement adaptées à la réalisation d'opérations de déformation de pièces plates. Les figures 7 à 9 illustrent un troisième exemple de réalisation de l'invention dans lequel la bobine 20 est du type dit « bobine cylindrique », et est particulièrement adaptée à la réalisation d'opérations de déformation de pièces tubulaires.

La bobine est conçue pour que la densité de courant dans une zone de la bobine soit suffisante pour satisfaire les conditions de formage et/ou de soudage. Cette zone est appelée ci-après « partie active ».

Dans le premier exemple de réalisation représenté sur les figures 1 à 3, le masque 30 illustré par la figure 3 est configuré pour coopérer avec la bobine 20 représentée sur la figure 2, lorsqu'il est dans une position dite « position d'utilisation », de sorte à former un ensemble 10 tel que le montre la figure 1.

Avantageusement, le masque 30 et la bobine 20 peuvent coopérer de façon amovible, de sorte que le masque 30 peut être retiré de la bobine 20 si besoin.

Comme le montre la figure 2, la bobine 20 comprend au moins deux branches reliées l'une à l'autre. Une des branches, dite « première branche » 21 est destinée à être connectée à la source d'alimentation en courant.

La première branche 21 est reliée à une autre branche, appelée ici « deuxième branche » 22. Telles que représentées par la figure 2, lesdites première et deuxième branches 21 et 22 s'étendent selon des axes longitudinaux sensiblement parallèles, respectivement entre une extrémité libre, dite « première extrémité » 210, 220, et une extrémité par laquelle elles sont reliées indirectement l'une à l'autre, dite « seconde extrémité » 211, 221.

Les première et deuxième branches 21 et 22 s'étendent de manière adjacente l'une par rapport à l'autre de sorte à définir une fente 23.

Plus précisément, les première et deuxième branches 21 et 22 présentent chacune un flanc interne 212, 222 agencé en regard l'un de l'autre de sorte à définir la fente 23.

La fente 23 est de largeur constante.

Chaque première et deuxième branche 21 et 22 présente également une face longitudinale 213, 223. Les faces longitudinales 213 et 223 sont destinées à être agencées du côté d'une pièce à déformer lors de l'utilisation de l'ensemble 10.

Dans le premier exemple de réalisation de l'ensemble 10, les première et deuxième branches 21 et 22 de la bobine 20 sont reliées l'une à l'autre par une zone de jonction 24.

La zone de jonction 24 se présente sous la forme d'une platine, à travers laquelle est formée une ouverture 25 traversante comprenant une surface périphérique interne 26.

Une face 240 de la platine comprend un bossage 241 destiné à venir en regard de la pièce à déformer.

Plus particulièrement, dans le premier exemple d'ensemble 10, le bossage 241 comprend un sommet agencé autour de la périphérie de l'ouverture 25, comme le montre la figure 2.

Dans une forme de réalisation, l'ouverture 25 présente une section droite de forme sensiblement oblongue.

Dans une forme non limitative de réalisation, chacune des première et deuxième branches 21 et 22 est jointe à la zone de jonction par une portion 214, 224 de section réduite par rapport auxdites branches 21 et 22. Chaque portion 214, 224 est reliée à une des secondes extrémités 211, 221 des branches 21, 22 comme le montre la figure 2.

Chaque portion 214, 224 de la bobine 20 forme, avec la seconde extrémité 211, 221 d'une branche 21, 22, un épaulement orienté vers l'extérieur de la bobine 20.

La fente 23 s'étend depuis les premières extrémités 210, 220 des branches 21 et 22 jusqu'à l'ouverture 25. Autrement dit, la fente 23 s'étend le long des branches 21 et 22 et des portions 214, 224.

Dans le cas d'une bobine plate telle que décrite dans ce premier exemple de réalisation, le courant circule à travers la bobine 20, en pénétrant dans la première branche 21 et en ressortant dans la deuxième branche 22, en passant par la zone de jonction 24. Le courant est concentré dans la partie active, située dans la zone de jonction 24, sur une couche délimitée par une surface active 27, au niveau de la face 240 de la platine, au sommet du bossage 241, et d'épaisseur correspondant à l'épaisseur de peau. Le courant génère, dans un espace délimité entre la pièce à déformer et la surface active 27, un champ magnétique concentré.

On comprend ici que la forme géométrique du bossage 241 dépend notamment de celle de la pièce à obtenir à l'issue de la déformation.

Le masque 30 est configuré de sorte à présenter une forme au moins partiellement complémentaire de la forme de la bobine 20. A cet effet, le masque 30 comprend une première partie 31 insérée dans la fente 23, lorsque le masque 30 coopère avec la bobine 20.

La première partie 31 présente préférentiellement une épaisseur choisie de sorte qu'un jeu mécanique existe lorsque ladite première partie 31 est insérée dans la fente 23. Ainsi, son insertion et son retrait manuel de la fente 23 sont facilités. Une telle épaisseur est par exemple égale à environ huit dixièmes de millimètre pour une fente 23 présentant une largeur d'un millimètre.

Cette épaisseur est également choisie pour des raisons de rigidité mécanique et diélectrique du masque 30.

Le masque 30 comprend une deuxième partie 32, recouvrant la surface active 27 de la bobine 20, lorsque ledit masque 30 coopère avec la bobine 20.

Dans une forme préférée illustrée sur la figure 3, la deuxième partie 32 présente une forme géométrique sensiblement identique à la surface du bossage 241.

La deuxième partie 32 présente préférentiellement une épaisseur inférieure à un millimètre, par exemple cinq dixièmes de millimètre, de sorte à éviter tout risque de diminution de l'efficacité de l'action de la bobine 20 sur la pièce à déformer.

Dans une forme préférée de réalisation, le masque 30 comprend une troisième partie 33, recouvrant la surface périphérique interne 26 de l'ouverture 25 de la bobine 20. Avantageusement, la troisième partie 33 confère au masque 30 une rigidité et une résistance mécanique plus importantes. En outre, elle contribue à assurer l'isolation électrique entre la bobine 20 et la pièce à déformer.

Dans le premier exemple de réalisation de l'ensemble 10, la troisième partie 33 présente une forme complémentaire de la forme de l'ouverture 25 de sorte à pouvoir coopérer avec cette dernière quand il est en position d'utilisation, comme le montre la figure 3. La troisième partie 33 recouvre donc la surface périphérique interne 26 de l'ouverture 25 lorsque le masque 30 est en position d'utilisation.

Le masque 30 comprend une quatrième partie 34, recouvrant en tout ou partie les faces longitudinales 213, 223, la face 240 de la platine, et préférentiellement une face de chaque portion 214 et 224, , lorsque le masque est en position d'utilisation. Cette quatrième partie 34 a également pour effet de conférer au masque 30 une rigidité et une résistance mécanique plus importantes. Préférentiellement, le masque peut être dimensionné de sorte à ne recouvrir qu'une partie des faces longitudinales 213, 233 lorsque les branches présentent une section de forme géométrique simple, c'est-à-dire ne comprenant pas d'angle vif et/ou de portion convexe et/ou concaves de faible rayon ; l'autre partie des faces longitudinales 213, 233 est alors recouverte par une couche de matériau isolant électriquement connu de l'état de la technique. Cette caractéristique présente l'intérêt de réduire les coûts de mise en œuvre de la présente invention.

Par ailleurs, la quatrième partie 33 permet de faciliter la manipulation du masque 30 et d'augmenter sa stabilité sur la bobine, lorsqu'il est en position d'utilisation.

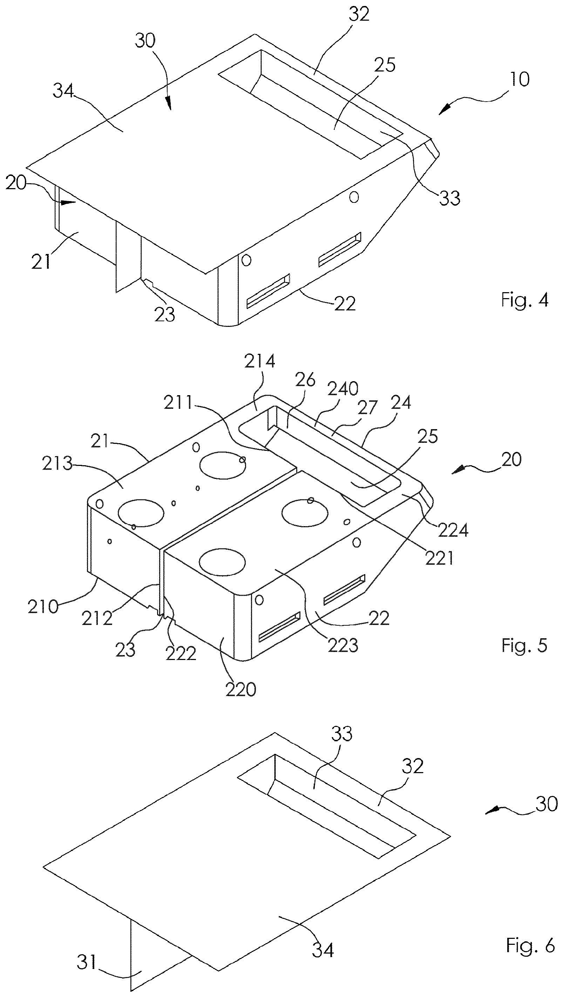

Dans le deuxième exemple de réalisation représenté sur les figures 4 à 6, le masque 30 illustré par la figure 6 est configuré pour coopérer avec la bobine 20 représentée sur la figure 5, lorsqu'il occupe sa position d'utilisation, de sorte à former un ensemble 10 tel que le montre la figure 4.

La bobine 20 selon le deuxième exemple de réalisation de l'ensemble 10 comprend une première et une deuxième branche 21 et 22, ainsi qu'une zone de jonction 24, telle que décrites précédemment.

Chaque première et deuxième branche 21 et 22 présente une face longitudinale 213, 223, telle que décrite ci-avant. Les faces longitudinales 213 et 223 sont destinées à être agencées du côté de la pièce à déformer lors de l'utilisation de l'ensemble 10.

La zone de jonction 24 est reliée par deux portions 214, 224 comme décrit pour le premier exemple de réalisation.

La zone de jonction 24 diffère de celle décrite précédemment en ce qu'elle présente la forme d'une troisième branche s'étendant de façon sensiblement perpendiculaire par rapport aux axes longitudinaux des première et deuxième branches 21 et 22.

En outre, les portions 214, 224 sont configurées de sorte que les épaulements sont agencés en vis-à-vis l'un de l'autre.

Comme le montre la figure 5, l'ouverture 25 est délimitée par les épaulements formés par les portions 214, 224 et les secondes extrémités 211, 221 des branches 21 et 22, et par la zone de jonction 24, lesquelles définissent une surface périphérique interne 26 de l'ouverture 25. Dans l'exemple non limitatif représenté sur la figure 5, l'ouverture 25 présente une section droite de forme sensiblement rectangulaire.

La fente 23 s'étend depuis les premières extrémités 210, 220 des branches 21 et 22, jusqu'à l'ouverture 25, c'est-à-dire jusqu'à leurs secondes extrémités 211, 221.

Dans le deuxième exemple de réalisation de l'ensemble 10, la bobine 20 est conçue de sorte que la partie active soit située dans la zone de jonction 24, sur une couche délimitée par une surface active 27, au niveau d'une face 240 de la troisième branche.

Dans le deuxième exemple de réalisation de l'ensemble 10, le masque 30 comprend, de manière analogue au premier exemple de réalisation, une première partie 31 insérée dans la fente 23 et une deuxième partie 32 recouvrant la surface active 27 de la bobine 20, lorsque le masque 30 coopère avec la bobine 20.

Le masque 30 comprend également préférentiellement une troisième partie 33, telle que décrit précédemment. De manière analogue au premier exemple de réalisation de l'ensemble 10, dans ce deuxième exemple de réalisation, la troisième partie 33 présente une forme complémentaire de la forme de l'ouverture 25 de sorte à pouvoir coopérer avec elle quand il est en position d'utilisation.

Le masque 30 comprend une quatrième partie 34, recouvrant au moins en partie les faces longitudinales 213, 223, et préférentiellement une face de chaque portion 214 et 224, lorsque le masque est en position d'utilisation.

Cette quatrième partie 34 a également pour effet de conférer au masque 30 une rigidité et une résistance mécanique plus importantes. Par ailleurs, la quatrième partie 34 permet de faciliter la manipulation du masque 30 et d'augmenter sa stabilité sur la bobine, lorsqu'il est en position d'utilisation.

Dans le troisième exemple de réalisation représenté sur les figures 7 à 9, le masque 30 illustré par la figure 9 est configuré pour coopérer avec la bobine 20 représentée sur la figure 8, lorsqu'il occupe sa position d'utilisation, de sorte à former un ensemble 10 tel que le montre la figure 7.

La bobine 20 selon le troisième exemple de réalisation de l'ensemble 10 comprend, de manière analogue aux bobines 20 des exemples de réalisation précédemment décrits, deux branches 21 et 22 s'étendant entre une première extrémité 210, 220 et une seconde extrémité 211, 221.

Par ailleurs, chaque première et deuxième branche 21 et 22 présente une face longitudinale 213, 223. Les faces longitudinales 213 et 223 sont destinées à être agencées du côté de la pièce à déformer lors de l'utilisation de l'ensemble 10.

A la différence des exemples de réalisation précédemment décrits, dans ce troisième exemple de réalisation, la zone de jonction 24 est reliée aux première et deuxième branches 21 et 22 par leur face longitudinale 213, 223 respective, entre leur première extrémité 210, 210 et leur seconde extrémité 221, 221, comme le montre la figure 8.

Par ailleurs, la bobine 20 diffère de celle décrite précédemment dans les premier et deuxième exemples de réalisation en ce que la zone de jonction 24 est directement reliée aux branches 21 et 22, dans le sens où la bobine 20 ne présente pas de portion 214, 224.

La zone de jonction 24 est formée par un corps de forme géométrique sensiblement parallélépipédique comprenant une face 240 s'étendant préférentiellement perpendiculairement aux faces longitudinales 213, 223. Comme le montre la figure 8, la zone de jonction 24 présente une ouverture 25 traversante, dans laquelle débouche la fente 23.

Dans ce troisième exemple de réalisation de l'ensemble 10, l'ouverture 25 de la bobine 20 présente une section droite sensiblement circulaire.

Dans le cas d'une bobine de type circulaire, le courant est concentré sur une couche délimitée par la surface active 27, au niveau de la surface périphérique interne 26 de l'ouverture 25.

La pièce à déformer est, dans ce cas, destinée à être introduite dans l'ouverture 25 de la bobine 20 lors de l'utilisation de l'ensemble 10.

Comme l'illustre la figure 9, le masque 30 comprend, de manière analogue aux premier et deuxième exemples de réalisation, une première partie 31 configurée pour être insérée dans la fente 23 et une deuxième partie 32 configurée pour recouvrir la surface active 27 de la bobine 20, lorsque le masque 30 coopère avec la bobine 20. La deuxième partie 32 présente donc une forme complémentaire de la forme de ladite ouverture 25, c'est-à-dire, dans cet exemple de réalisation, une forme cylindrique de section droite circulaire.

Dans cet exemple de réalisation, les deuxième et troisième parties 32 et 33 sont confondues, en ce sens que les références numériques « 32 » et « 33 » désignent une même partie du masque 30, comme représenté sur la figure 9.

Le masque 30 comprend une quatrième partie 34 recouvrant au moins en partie les faces longitudinales 213, 223 et la face 240 du corps, lorsque le masque est en position d'utilisation.

La quatrième partie 34 présente ici une forme d'épaulement.

Dans les exemples de réalisation représentés sur les figures 4, 6, 7 et 9, le masque s'étend au-delà des faces longitudinales 213, 223 des branches 21 et 22 de sorte à assurer une isolation électrique entre la pièce à déformer et la bobine 20.

Il y a lieu de noter que dans d'autres exemples de réalisation de l'ensemble 10, l'ouverture 25 peut présenter une section droite de n'importe quelle forme géométrique, selon le type de pièce à déformer et/ou selon le type d'opération de déformation à réaliser.

Il vient d'être décrit trois exemples de réalisation d'ensembles comprenant chacun un type particulier de bobine.

Dans tous ces exemples de réalisation et de manière non limitative, le masque 30 est monobloc et est avantageusement réalisé dans un matériau flexible, c'est-à-dire un matériau déformable. En outre, ce matériau est préférentiellement choisi de sorte à présenter des propriétés élastiques, c'est-à-dire des propriétés selon lesquelles le matériau reprend sa forme initiale après déformation.

Le matériau du masque 30 est choisi de sorte qu'il présente préférentiellement une rigidité diélectrique au moins égale à 20kV/mm et de sorte qu'il résiste à une température au moins égale à 200°C.

Un tel matériau peut être un polymère, tel qu'un silicone ou une résine synthétique.

Le masque 30 peut avantageusement être réalisé par surmoulage ou moulage par compression.

Le masque 30 est configuré pour présenter des dimensions sensiblement égales à la bobine 20 de sorte que, lorsqu'il coopère avec ladite bobine 20, il est assujetti à cette dernière préférentiellement uniquement par action de serrage, par exemple, par ajustement serré.

Grâce à ces caractéristiques, l'emploi d'une colle ou d'un adhésif à l'interface entre la bobine 20 et le masque 30 est évité, ce qui permet de simplifier l'assemblage de l'ensemble 10, et donc de réduire son coût.

De manière plus générale, il est à noter que les modes de mise en œuvre et de réalisation de l'ensemble 10 considérés ci-dessus ont été décrits à titre d'exemples non limitatifs et que d'autres variantes sont par conséquent envisageables.

Notamment, l'invention a été décrite en considérant deux exemples de formes géométriques de bobines, et par voie de conséquence deux exemples de formes géométriques de masques. Rien n'exclut cependant, dans d'autres types de réalisation, de considérer d'autres formes géométriques de bobines et de masques.

## Revendications

1. Ensemble (10) pour déformer des pièces métalliques par impulsion magnétique, par exemple par magnéto-formage et/ou magnéto-soudage, comprenant :
- une bobine (20) comportant :
- une première et une deuxième branches (21, 22) destinées à être connectées à une source d'alimentation en courant, lesdites première et deuxième branches (21, 22) s'étendant de manière adjacente l'une par rapport à l'autre de sorte à définir une fente (23), chaque première et deuxième branche (21, 22) présentant une face longitudinale (213, 223) destinée à être agencée du côté de la pièce à déformer lors de l'utilisation de l'ensemble (10), les première et deuxième branches (21, 22) étant reliées l'une à l'autre par une zone de jonction (24),
- une partie active reliée aux première et deuxième branches (21, 22), dont une surface, dite « surface active (27) », est destinée à être disposée en regard d'une pièce à déformer,
- un masque (30), monobloc, configuré pour coopérer de manière amovible avec tout ou partie de la bobine (20), ledit masque (30) présentant une forme au moins en partie complémentaire de la forme de la bobine (20) de sorte que lorsque ledit masque (30) est en position d'utilisation, il est inséré par une première partie (31), dans la fente (23) et il recouvre, par une deuxième partie (32), la surface active (27) de la bobine (20), ledit masque (30) étant réalisé dans un matériau isolant électriquement,
**caractérisé en ce que** le masque (30) comprend une quatrième partie (34) recouvrant au moins partiellement les faces longitudinales (213, 223) et une face (240) de la zone de jonction (24), lorsque ledit masque (30) est en position d'utilisation.

2. Ensemble (10) selon la revendication 1, dans lequel la bobine (20) comprend une ouverture (25) traversante dans laquelle débouche la fente (23), le masque (30) comprenant une troisième partie (33) recouvrant une surface périphérique interne (26) de l'ouverture (25) lorsqu'il est en position d'utilisation.

3. Ensemble (10) selon l'une des revendications 1 à 2, dans lequel le masque (30) est réalisé dans un matériau flexible.

4. Ensemble (10) selon l'une des revendications 1 à 3, dans lequel le masque (30) est réalisé dans un matériau élastique.

5. Ensemble (10) selon l'une des revendications 1 à 4, dans lequel le masque (30) est réalisé dans un matériau silicone.

6. Ensemble (10) selon l'une des revendications 1 à 5, dans lequel le matériau dans lequel est réalisé le masque (30) est choisi pour résister à une température au moins égale à 200°C et pour présenter une rigidité diélectrique au moins égale à 20kV/mm.

## Patentansprüche

1. Baugruppe (10) zum Verformen von Metallteilen durch Magnetimpuls, beispielsweise durch Magnetumformen und/oder Magnetschweißen, umfassend:
- eine Spule (20), aufweisend:
o einen ersten und einen zweiten Zweig (21, 22), die dazu bestimmt sind, mit einer Stromversorgungsquelle verbunden zu werden, wobei sich der erste und zweite Zweig (21, 22) benachbart zueinander erstrecken, um einen Schlitz (23) zu definieren, jeder erste und zweite Zweig (21, 22) mit einer Längsseite (213, 223), die dazu bestimmt ist, bei Verwendung der Baugruppe (10) auf der Seite des zu verformenden Teils angeordnet zu werden, wobei der erste und zweite Zweig (21, 22) durch einen Verbindungsbereich (24) miteinander verbunden sind,
o einen aktiven Teil, der mit dem ersten und zweiten Zweig (21, 22) verbunden ist, von dem eine Fläche, die "aktive Fläche (27)", dazu bestimmt ist, gegenüber einem zu verformenden Teil angeordnet zu sein,
- eine einteilige Maske (30), die so eingerichtet ist, dass sie ganz oder teilweise mit der Spule (20) abnehmbar zusammenarbeitet, wobei die Maske (30) eine Form aufweist, die mindestens teilweise mit der Form der Spule (20) komplementär ist, so dass, wenn sich die Maske (30) in der Gebrauchsposition befindet, sie durch einen ersten Teil (31) in den Schlitz (23) eingeführt wird und sie durch einen zweiten Teil (32) die aktive Fläche (27) der Spule (20) bedeckt, wobei die Maske (30) aus einem elektrisch isolierenden Material hergestellt ist,
**dadurch gekennzeichnet, dass** die Maske (30) einen vierten Teil (34) umfasst, der die Längsseiten (213, 223) und eine Seite (240) des Verbindungsbereichs (24) mindestens teilweise abdeckt, wenn sich die Maske (30) in der Gebrauchsposition befindet.

2. Baugruppe (10) nach Anspruch 1, wobei die Spule (20) eine durchgehende Öffnung (25) umfasst, in die der Schlitz (23) mündet, wobei die Maske (30) einen dritten Teil (33) umfasst, der eine innere Umfangsfläche (26) der Öffnung (25) abdeckt, wenn sie sich in der Gebrauchsposition befindet.

3. Baugruppe (10) nach einem der Ansprüche 1 bis 2, wobei die Maske (30) aus einem flexiblen Material hergestellt ist.

4. Baugruppe (10) nach einem der Ansprüche 1 bis 3, wobei die Maske (30) aus einem elastischen Material hergestellt ist.

5. Baugruppe (10) nach einem der Ansprüche 1 bis 4, wobei die Maske (30) aus einem Silikonmaterial hergestellt ist.

6. Baugruppe (10) nach einem der Ansprüche 1 bis 5, wobei das Material, aus dem die Maske (30) hergestellt ist, so ausgewählt ist, dass es einer Temperatur von mindestens 200 °C standhält und eine Spannungsfestigkeit von mindestens 20 kV/mm aufweist.

## Claims

1. An assembly (10) for deforming metal parts by magnetic pulse, for example by magnetic pulse forming and/or magnetic pulse welding, comprising:
- a coil (20) including:
∘ a first and a second branches (21, 22) intended to be connected to a power supply source, said first and second branches (21, 22) extending adjacent to one another so as to define an slot (23), each first and second branches (21, 22) having a longitudinal face (213, 223) intended to be arranged on the side of the part to be deformed when using the assembly (10), the first and second branches (21, 22) being connected to one another by a junction zone (24),
∘ an active part connected to the first and second branches (21, 22), of which a surface, referred to as "active surface (27)", is intended to be disposed facing a part to be deformed,
- a mask (30), made of one piece, configured to cooperate removably with all or part of the coil (20), said mask (30) having a shape at least partially complementary to the shape of the coil (20) such that when said mask (30) is in the use position, it is inserted by a first part (31), into the slot (23) and it covers, by a second part (32), the active surface (27) of the coil (20), said mask (30) being made of an electrically insulating material,
**characterised in that** the mask (30) comprises a fourth part (34) at least partially covering the longitudinal faces (213, 223) and a face (240) of the junction zone (24), when said mask (30) is in the use position.

2. The assembly (10) according to claim 1, wherein the coil (20) comprises a through opening (25) wherein the slot (23) opens, the mask (30) comprising a third part (33) covering an inner peripheral surface (26) of the opening (25) when in the use position.

3. The assembly (10) according to one of claims 1 to 2, wherein the mask (30) is made of a flexible material.

4. The assembly (10) according to one of claims 1 to 3, wherein the mask (30) is made of an elastic material.

5. The assembly (10) according to one of claims 1 to 4, wherein the mask (30) is made of a silicone material.

6. The assembly (10) according to one of claims 1 to 5, wherein the material of which the mask (30) is made is chosen to withstand a temperature at least equal to 200°C and to have a dielectric strength at least equal to 20kV/mm.
